# FASCICULE DE BREVET EUROPEEN

(11) **EP 1 094 037 B1**
(45) Date de publication et mention de la délivrance du brevet: **17.01.2007**
(21) Numéro de dépôt: 00402508.6
(22) Date de dépôt: 12.09.2000
(51) Int. Cl.: C02F 1/78, C02F 1/00

(54) **Procédé et installation d'élaboration et de délivrance d'eau ozonée à un point utilisateur**
Verfahren und Vorrichtung zur Verarbeitung und Ablieferung von ozoniertem Wasser an eine Verbrauchsstelle
Process and apparatus for processing and delivery of ozonated water to a point of use

(30) Priorité: 20.10.1999 FR 9913095
(43) Date de publication de la demande: 25.04.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Kempen, Carinne, 92110 Clichy (FR); Laroye, Stéphane, 91190 Villiers le Bacle (FR)
(74) Mandataire: Mellul-Bendelac, Sylvie Lisette

(56) Documents cités:
- WO-A-91/12209
- US-A- 5 451 314
- US-A- 5 868 945
- US-A- 6 106 731

## Description

La présente invention concerne le domaine des procédés d'élaboration et de délivrance d'eau ozonée à au moins un point utilisateur, eau ozonée qui peut être on le sais utilisée dans un très grand nombre d'applications industrielles : par exemple en liaison avec l'environnement (traitement des eaux..), pour le traitement de produits alimentaires à l'ozone (lavage de produits alimentaires à l'eau ozonée tels produits de la mer mais aussi fruits et légumes etc...), ou encore dans l'aquaculture et la pisciculture (élevages où l'on procède à un traitement à l'ozone de tout ou partie de l'eau qui alimente le ou les bassins d'élevage du site utilisateur).

On connaît essentiellement deux types de procédés d'élaboration et de délivrance d'eau ozonée : un premier type de procédé où l'on procède à l'ozonation en ligne de la totalité du débit d'eau, et un second type de procédé où l'on procède à une ozonation de seule une partie du débit d'eau dans une boucle de dérivation.

Dans les deux cas, il faut bien noter que l'objectif essentiel de cet état de la technique antérieur est de réaliser un temps de contact suffisant entre l'ozone et l'eau, pour obtenir une désinfection satisfaisante de l'eau et une bonne gestion de la teneur résiduel en ozone et en oxydants secondaires dans l'eau ainsi traitée.

On peut alors faire les remarques suivantes sur ces deux types de procédés existants :
- premier type de procédé « en ligne » : dans ce cas-ci, l'ozone est injectée dans un organe de dissolution tel un mélangeur statique, qui est placé en ligne sur la canalisation d'eau à traiter du site utilisateur. Le temps de contact nécessaire (à la désinfection) est alors obtenu soit dans une capacité de stockage intermédiaire, soit encore tout simplement dans la longueur de canalisation du site utilisateur si cette longueur est suffisante.

La régulation du taux de traitement souhaité (quantité de grammes d'ozone par m³ d'eau) est alors nécessairement effectuée à partir du débit d'eau que tire le site utilisateur en aval, le débit de gaz ozoné étant généralement fixe par ailleurs (la réalisation d'un débit de gaz variable étant très onéreuse).
- second type de procédé « ozonation d'une dérivation » : dans ce second cas, une partie fixe du débit d'eau du site utilisateur est dérivée pour être ozonée.

Une pompe prélève un débit fixe d'eau, dans lequel l'ozone est injecté au niveau d'un organe de dissolution typiquement du type hydro-injecteur (effet venturi) qui est placé dans la dérivation. On pourrait dans cette configuration également utiliser un mélangeur statique mais l'hydro-injecteur est un matériel moins onéreux.

On sait qu'un hydro-injecteur ne supporte que des variations très faibles de débit (d'où le débit dérivé qui est fixe) : en effet si le débit d'eau passant dans l'hydro-injecteur variait substantiellement, on assisterait à une variation du débit de gaz ozoné aspiré et donc à une variation de la teneur en ozone dissoute et donc du taux de traitement obtenu.

Comme dans le cas précédent, la régulation du taux de traitement souhaité (quantité de gramme d'ozone par m³ d'eau) ne peut se faire qu'à partir du débit d'eau que tire le site utilisateur en aval, ce qui ne fournit aucune indépendance vis a vis des paramètres du site utilisateur aval.

Ces procédé existants sont donc directement dépendants des paramètres de l'application finale de l'eau ozonée, et s'adaptent donc difficilement à des applications qui nécessitent de fortes variations de taux de traitement (selon par exemple les produits traités), de débit d'eau, ou encore à d'incessants cycles de marche/arrêt en fonction des pauses et arrêts de production de l'application finale de l'eau ozonée.

L'un des objectifs de la présente invention est alors d'apporter une solution aux problèmes techniques ci-dessus mentionnés, en proposant un procédé capable de s'adapter aux demandes (taux, débit...) de l'application utilisatrice finale, tout en étant régulé de manière indépendante des paramètres de cette application finale.

La présente invention concerne alors un procédé d'élaboration et de délivrance d'eau ozonée à au moins un point utilisateur, selon lequel :
a) on dispose d'une capacité tampon de stockage pour l'eau ozonée ;
b) on dispose d'une boucle amont d'ozonation permettant l'alimentation de la capacité en eau ozonée, pour laquelle :
   - la capacité est intégrée dans la boucle ;
   - la boucle amont d'ozonation comporte un organe de transfert gaz/liquide ainsi qu'un organe de régulation du débit d'eau circulant dans la boucle ;
   - on dispose d'une ligne d'apport de gaz ozoné reliée en sa partie aval à l'organe de transfert et en sa partie amont à un ozoneur;
   - on dispose d'une ligne d'apport d'eau neuve connectée en sa partie aval sur la boucle amont d'ozonation et munie d'un organe d'interruption de débit d'eau neuve;
   - la portion de boucle située entre la capacité et le point de raccordement de la ligne d'apport d'eau neuve est munie d'un organe d'interruption de débit de recirculation amont de la capacité ;
c) on dispose d'une ligne d'alimentation dudit au moins un point utilisateur en eau ozonée, à partir de la capacité ;
d) on régule le niveau de remplissage de la capacité entre un niveau bas N_{b} et un niveau haut Nₕ à l'aide du dit organe de régulation du débit d'eau circulant dans la boucle d'ozonation, l'un ou l'autre desdits organe d'interruption du débit d'apport d'eau neuve et organe d'interruption de débit de recirculation amont de la capacité étant toujours ouvert tandis que l'autre desdits organes est fermé.

Le procédé selon l'invention pourra également adopter l'une ou plusieurs des caractéristiques suivantes :
- lors de phases de consommation en eau ozonée d'au moins un des dits postes utilisateur, l'organe d'interruption de débit de recirculation amont de la capacité est en position de fermeture, et l'organe d'interruption du débit d'apport d'eau neuve est en position d'ouverture pour permettre d'admettre de l'eau neuve dans la boucle amont d'ozonation, l'ozoner au niveau de l'organe de transfert, et alimenter en eau ainsi ozonée la capacité, le niveau de remplissage de la capacité étant régulé entre le niveau bas N_{b} et le niveau haut Nₕ à l'aide de l'organe de régulation du débit d'eau circulant dans la boucle d'ozonation à partir de l'un des signaux suivants :
   i) une mesure du niveau de remplissage de la capacité ;
   j) une mesure de consommation d'eau ozonée du ou des postes utilisateurs qui consomment.
- lors d'arrêts ou de pauses de consommation en eau ozonée dudit au moins un poste utilisateur, on effectue une recirculation du flux d'eau ozonée en provenance de la capacité vers cette capacité, avant que le flux d'eau n'atteigne le poste utilisateur.
- lors d'arrêts ou de pauses de consommation en eau ozonée dudit au moins un poste utilisateur, on procède aux mesures suivantes : dès que le niveau de remplissage de la capacité passe au dessus du niveau haut Nh, on met ledit organe d'interruption du débit d'apport d'eau neuve en position de fermeture pour interrompre l'arrivée d'eau neuve, et l'on met ledit organe d'interruption de débit de recirculation amont de la capacité en position d'ouverture pour permettre la recirculation de l'eau ozonée de la capacité dans la boucle amont d'ozonation ainsi fermée.
- lors de tels arrêts ou pauses de consommation, on diminue la puissance de l'ozoneur au niveau d'une puissance minimum non nulle.

L'invention concerne également une installation d'élaboration et de délivrance d'eau ozonée à au moins un point utilisateur, qui comprend :
a) une capacité tampon de stockage pour l'eau ozonée ;
b) une boucle amont d'ozonation permettant l'alimentation de la capacité en eau ozonée, pour laquelle :
   - la capacité est intégrée dans la boucle ;
   - la boucle amont d'ozonation comporte un organe de transfert gaz/liquide ainsi qu'un organe de régulation du débit d'eau circulant dans la boucle ;
   - on dispose d'une ligne d'apport de gaz ozoné reliée en sa partie aval à l'organe de transfert et en sa partie amont à un ozoneur;
   - on dispose d'une ligne d'apport d'eau neuve connectée en sa partie aval sur la boucle amont d'ozonation et munie d'un organe d'interruption de débit d'eau neuve;
   - la portion de boucle située entre la capacité et le point de raccordement de la ligne d'apport d'eau neuve est munie d'un organe d'interruption de débit de recirculation amont de la capacité ;
c) une ligne d'alimentation dudit au moins un point utilisateur en eau ozonée, à partir de la capacité ;
l'un ou l'autre desdits organe d'interruption du débit d'apport d'eau neuve et organe d'interruption de débit de recirculation amont de la capacité étant toujours en position d'ouverture tandis que l'autre desdits organes est alors en position de fermeture.

Selon l'un des modes de réalisation de l'invention, la ligne d'alimentation du ou des postes utilisateur est munie d'un organe de pompage et d'un piquage, apte à retourner le flux d'eau ozonée en provenance de la capacité vers cette capacité, avant que le flux d'eau ozonée n'atteigne le poste utilisateur.

Selon l'un des aspects de l'invention, l'installation comporte une unité d'acquisition et de traitement de données, apte, lors de phases de consommation en eau ozonée d'au moins un des dits postes utilisateur à réaliser les actions suivantes :
- à placer l'organe d'interruption de débit de recirculation amont de la capacité en position de fermeture, et à placer l'organe d'interruption du débit d'apport d'eau neuve en position d'ouverture ;
- à acquérir l'un des signaux suivants : une mesure du niveau de remplissage de la capacité ou une mesure de consommation d'eau ozonée du ou des postes utilisateurs qui consomment ;
- à réguler, à partir de l'un des deux signaux précédents, le niveau de remplissage de la capacité entre un niveau bas N_{b} et un niveau haut Nₕ.

L'unité d'acquisition et de traitement de données est avantageusement apte, lors d'arrêts ou de pauses de consommation en eau ozonée du ou des postes utilisateur, à mettre l'organe d'interruption du débit d'apport d'eau neuve en position de fermeture pour interrompre l'arrivée d'eau neuve, et à mettre l'organe d'interruption de débit de recirculation amont de la capacité en position d'ouverture pour permettre la recirculation de l'eau ozonée de la capacité dans la boucle amont d'ozonation ainsi fermée.

L'unité d'acquisition et de traitement de données est également avantageusement apte, lors de tels arrêts ou pauses de consommation, à diminuer la puissance de l'ozoneur au niveau d'une puissance minimum qui est non nulle.

D'autres caractéristiques et avantages de l'invention ressortiront de la description suivante, donnée uniquement à titre illustratif et nullement limitatif, et faite en référence aux dessins annexés sur lesquels :
- la figure 1 (A et B) est une représentation schématique de deux installations de production d'eau ozonée selon l'art antérieur (en ligne et en dérivation) ;
- la figure 2 est une représentation schématique d'une installation d'élaboration et de délivrance d'eau ozonée conforme à la présente invention.

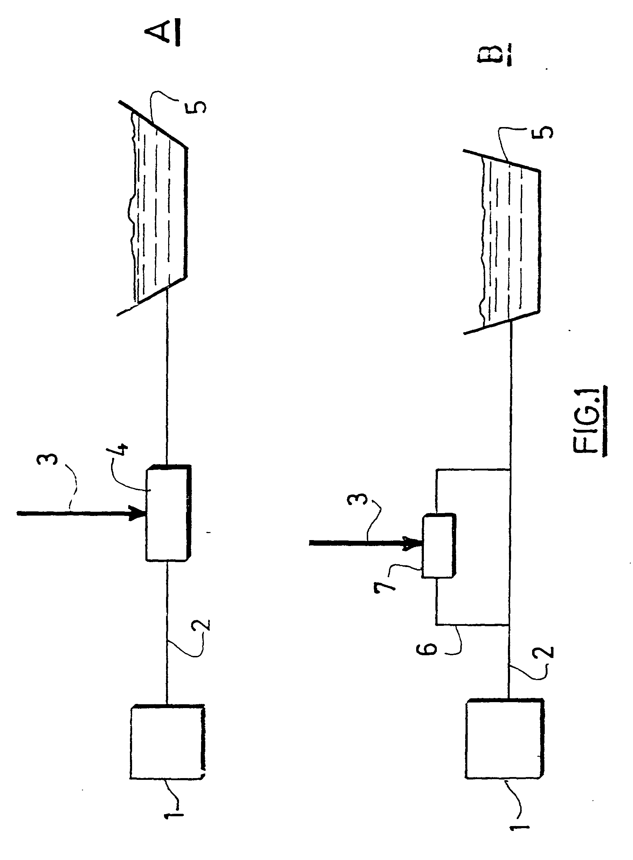

On a illustré sur la figure 1A le cas d'une ozonation « en ligne » d'un débit d'eau en provenance d'une source 1, afin d'alimenter en eau ozonée un poste utilisateur final 5 (par exemple un bassin d'élevage en pisciculture).

On note la présence d'une ligne 3 d'arrivée de gaz ozoné (en provenance d'un ozoneur non représenté), qui doit être injecté dans un organe de dissolution 4 (ici un mélangeur statique), qui est placé en ligne sur la canalisation 2 d'eau à traiter du site utilisateur. Le temps de contact nécessaire à la désinfection est ici obtenu dans la longueur de canalisation existant entre le mélangeur statique et le bac final de lavage.

Le débit de gaz ozoné étant fixé par ailleurs, pour réaliser une régulation du taux de traitement en ozone souhaité (quantité de grammes d'ozone par m³ d'eau), on est ici contraint de prendre en compte les variations de débit d'eau que tire le site utilisateur 5 en aval, pour piloter en conséquence la puissance de l'ozoneur.

C'est précisément de telles variations de débit d'eau qui conduisent à adopter ici préférentiellement un organe de transfert du type mélangeur statique qui peut accommoder de telles variations.

On sait alors (comme déjà expliqué plus haut) qu'une telle configuration n'est pas adaptée aux besoins qui sont à la base de la présente invention, puisque ce type de procédé selon la figure 1A entraînerait une variation de puissance de l'ozoneur variant au besoin entre 0 et 100% pour s'adapter au débit d'eau à produire, la nécessité de surdimensionner l'ozoneur pour répondre à de fortes et brutales demandes en ozone, sans toutefois pouvoir suivre efficacement les incessants cycle de marche / arrêt du site.

Considérons maintenant le cas de la figure 1B, qui illustre le cas d'un procédé d'ozonation d'une dérivation du débit d'eau principal : une pompe prélève un débit fixe d'eau dans la ligne 6 de dérivation , débit dans lequel l'ozone est injecté au niveau d'un organe 7 de dissolution du type hydro-injecteur (i.e fonctionnant par effet venturi) qui est placé dans la dérivation 6.

On sait qu'un hydro-injecteur ne supporte que des variations très faibles de débit (d'où le fait que le débit dérivé est fixe) : en effet si le débit d'eau passant dans l'hydro-injecteur variait substantiellement, on assisterait à une variation du débit de gaz ozoné aspiré et donc à une variation de la teneur en ozone dissout, entraînant une variation du taux de traitement obtenu.

Comme dans le cas précédent, la régulation du taux de traitement souhaité (quantité de grammes d'ozone par m³ d'eau) se fait nécessairement à partir du débit d'eau que tire le site utilisateur en aval, ce qui ne fournit aucune indépendance vis a vis des paramètres du site utilisateur final.

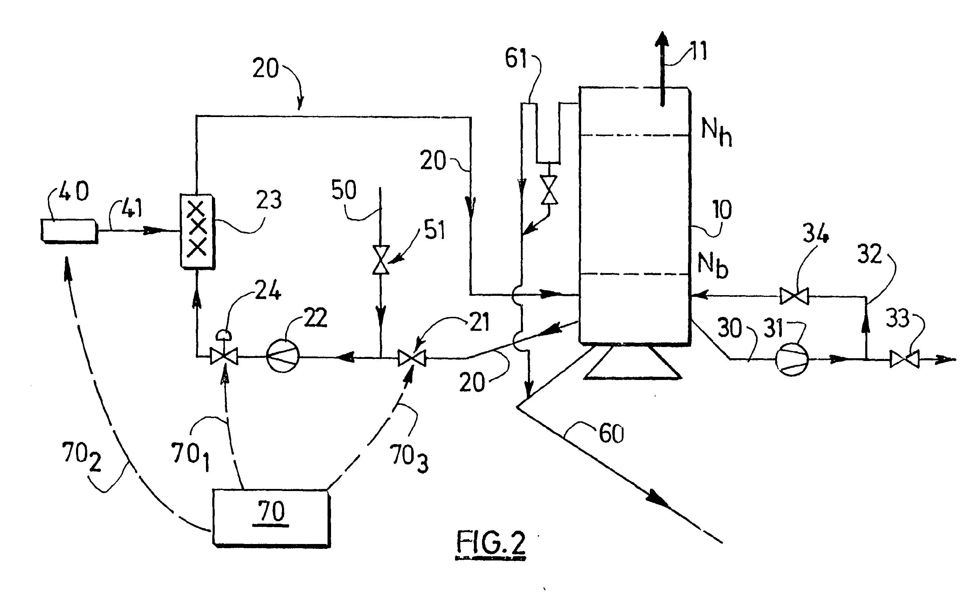

Comme décrit maintenant dans ce qui suit, le mode de réalisation de la figure 2, qui est conforme à la présente invention, fournit de tout autres avantages.

Comme on va le voir, elle permet de s'adapter à toutes les demandes et variations de demande du site utilisateur en eau ozonée, sans subir les contraintes de variation de production de ce site, et en régulant de façon indépendante de ce site final.

On reconnaît sur la figure 2 les éléments suivants :
- la présence d'une capacité tampon 10 de stockage pour l'eau ozonée ;
- la présence d'une boucle 20 amont d'ozonation permettant l'alimentation de la capacité en eau ozonée, pour laquelle :
   i) comme on le voit, la capacité est intégrée dans la boucle ;
   j) la boucle amont d'ozonation comporte un organe 23 de transfert gaz/liquide (ici un mélangeur statique) ainsi qu'un organe 24 de régulation du débit d'eau circulant dans la boucle ;
   k) une ligne 41 d'apport de gaz ozoné, reliée en sa partie aval à l'organe de transfert 23 et en sa partie amont à un ozoneur 40, permet d'alimenter en ozone l'organe de transfert 23 en vue de l'ozonation de l'eau circulant dans la boucle;
   1) on dispose d'une ligne 50 d'apport d'eau neuve connectée en sa partie aval sur la boucle amont d'ozonation et munie d'un organe 51 d'interruption de débit d'eau neuve;
   m) on note également que la portion de boucle 20 située entre la capacité et le point de raccordement de la ligne 50 d'apport d'eau neuve est munie d'un organe 21 d'interruption de débit de recirculation amont de la capacité ;
      - la présence d'une ligne 30 d'alimentation du ou des points utilisateur(s) finaux (non représentés) en eau ozonée, à partir de la capacité, au travers d'une pompe 31;
      - on voit par ailleurs que l'installation de la figure 2 est ici munie avantageusement, au niveau de la ligne d'alimentation30, d'un organe de pompage 31 et d'un piquage 32, arrangement qui est apte à retourner (via le jeu d'ouverture des vannes 33/34) le flux d'eau ozonée en provenance de la capacité vers cette même capacité, avant que le flux d'eau n'atteigne le poste utilisateur (cas des arrêts ou pauses de consommation),
      - la présence d'une unité d'acquisition et de traitement de données 70, apte à recevoir de l'installation des données (de débit, de teneur en ozone, de niveau de remplissage de la capacité.......) et à retroagir (flèches 70₁, 70₂.....) selon chaque cas sur la vanne 51, sur la vanne 21, sur la vanne de régulation 24, ou encore sur la puissance de l'ozoneur 40.

L'installation est par ailleurs munie d'organes de sécurité (représentés ou non sur la figure mais connus par ailleurs de l'homme du métier de l'ozone) tels un trop plein 61 muni d'une lyre remplie d'eau pour permettre l'évacuation sécuritaire de l'eau ozonée de la capacité en cas de niveau trop élevé, lyre munie d'une vanne de vidange collectée vers une évacuation à ciel fermé 60, de moyens 11 de récupération et retraitement ou stockage du ciel gazeux de la capacité, ou encore munie d'organes tels détecteur d'ozone ambiant, organe de détection de passage d'eau permettant d'arrêter la production d'ozone en cas de défaut d'eau, gyrophare, buzzer et autre système d'alerte en cas de défaut constaté, ou encore toujours à titre illustratif un système de télésurveillance permettant la traçabilité des paramètres du système, l'acquisition d'historiques, le télédiagnostic, le télédépannage etc.....

On conçoit mieux maintenant, à la lumière de toute la description qui précède, qu'une telle installation conforme à l'invention permette effectivement une grande adaptabilité et un fonctionnement indépendant de l'utilisation finale de l'eau ozonée.

Selon l'invention, sauf incidents ou raisons de sécurité justifiant un arrêt durable, en fonctionnement normal du site utilisateur, on ozone continuellement et on laisse toujours un certain débit d'eau circulant dans la boucle amont, même durant les phases d'arrêt ou de pause de production du site utilisateur aval.

L'un ou l'autre des organes 51 et 21 (d'interruption du débit d'apport d'eau neuve et d'interruption de débit de recirculation amont de la capacité) est toujours ouvert tandis que l'autre des deux organes est fermé.

Ainsi pour mieux visualiser les caractéristiques d'une telle installation, considérons le cas où le site final est en train de consommer de l'eau ozonée :
- il reçoit cette eau ozonée de la capacité via la ligne 30 (sans recirculation 32 ici) ;
- on admet de l'eau neuve régulièrement dans le circuit par la vanne 51 et la pompe 22, on l'ozone (23), et on alimente ainsi la capacité, la vanne 21 étant ici en position de fermeture ;
- on régule le niveau dans la capacité de manière dynamique entre N_{b} <N< Nₕ grâce à la vanne de régulation 24;
- si un changement brutal de consommation entraînait un passage de N au dessus de Nₕ, l'unité d'acquisition et de traitement de données 70 ordonne alors la fermeture de la vanne 51 d'apport d'eau neuve et l'ouverture de la vanne 21 pour recirculer le contenu de la capacité en attendant que les conditions de consommation se modifient et que le niveau redescende en deçà de Nₕ. (puis en deçà de N_{b} pour entraîner la réouverture de la vanne 51, la fermeture de la vanne 21 etc....).

Toujours dans le but de mieux visualiser les caractéristiques d'une telle installation, considérons le cas où le site final passe en phase d'arrêt ou de pause de consommation de l'eau ozonée :
- dans un premier temps le système continue comme précédemment (arrivée d'eau neuve, ozonation, alimentation de la capacité..), le niveau va donc monter et dépasser la limite Nh ;
- l'unité d'acquisition et de traitement de données 70 ordonne alors la fermeture de la vanne 51 d'apport d'eau neuve et l'ouverture de la vanne 21 pour recirculer le contenu de la capacité, elle place par ailleurs préférentiellement la vanne 24 en ouverture fixe faible (optimisée) ;
- préférentiellement également, l'unité met en place la recirculation aval de l'eau ozonée issue de la capacité (30/32/34) ;
- elle place également avantageusement l'ozoneur en fonctionnement selon un régime de puissance minimum non nulle.

Un installation telle que celle qui vient d'être décrite a été utilisée avec succès pour l'alimentation en eau ozonée de plusieurs postes utilisateurs effectuant du lavage de salades, dans les conditions résumées ci-dessous :
- la consommation moyenne de chaque poste était de 3 m³/h d'eau ozonée ;
- le taux de traitement appliqué à l'eau neuve était selon les produits de 10 à 20 ppm ;
- le niveau de remplissage de la capacité était régulé à 75% (de son volume total de remplissage), alors que les seuils Nb et Nh avaient été choisis respectivement à 65% et 85% (toujours du volume total de remplissage).

## Revendications

1. **Procédé d'élaboration et de délivrance d'eau ozonée** à au moins un point utilisateur, selon lequel :
a) on dispose d'une capacité tampon (10) de stockage pour l'eau ozonée ;
b) on dispose d'une boucle (20) amont d'ozonation permettant l'alimentation de la capacité en eau ozonée, pour laquelle :
- la capacité est intégrée dans la boucle ;
- la boucle amont d'ozonation comporte un organe (23) de transfert gaz/liquide ainsi qu'un organe (24) de régulation du débit d'eau circulant dans la boucle ;
- on dispose d'une ligne (41) d'apport de gaz ozoné reliée en sa partie aval à l'organe de transfert et en sa partie amont à un ozoneur;
- on dispose d'une ligne (50) d'apport d'eau neuve connectée en sa partie aval sur la boucle amont d'ozonation et munie d'un organe (51) d'interruption de débit d'eau neuve;
- la portion de boucle située entre la capacité et le point de raccordement de la ligne d'apport d'eau neuve est munie d'un organe (21) d'interruption de débit de recirculation amont de la capacité ;
c) on dispose d'une ligne d'alimentation (30) dudit au moins un point utilisateur en eau ozonée, à partir de la capacité ;
d) on régule le niveau de remplissage de la capacité entre un niveau bas N_{b} et un niveau haut Nₕ à l'aide du dit organe de régulation du débit d'eau circulant dans la boucle d'ozonation, l'un ou l'autre desdits organe d'interruption du débit d'apport d'eau neuve et organe d'interruption de débit de recirculation amont de la capacité étant toujours ouvert tandis que l'autre desdits organes est fermé.

2. Procédé selon la revendication 1, **caractérisé en ce que** lors de phases de consommation en eau ozonée d'au moins un des dits postes utilisateurs, ledit organe d'interruption de débit de recirculation amont de la capacité est en position de fermeture, et **en ce que** ledit organe d'interruption du débit d'apport d'eau neuve est en position d'ouverture pour permettre d'admettre de l'eau neuve dans la boucle amont d'ozonation, l'ozoner au niveau de l'organe de transfert, et alimenter en eau ainsi ozonée la capacité, le niveau de remplissage de la capacité étant régulé entre le niveau bas N_{b} et le niveau haut Nₕ à l'aide du dit organe de régulation du débit d'eau circulant dans la boucle d'ozonation à partir de l'un des signaux suivants :
- une mesure (N) du niveau de remplissage de la capacité ;
- une mesure de consommation d'eau ozonée du ou des postes utilisateurs qui consomment.

3. Procédé selon la revendication 1 **caractérisé en ce que** lors d'arrêts ou de pauses de consommation en eau ozonée dudit au moins un poste utilisateur, on effectue une recirculation (32/34) du flux d'eau ozonée en provenance de la capacité vers cette capacité, avant que le flux d'eau n'atteigne le poste utilisateur.

4. Procédé selon la revendication 1, **caractérisé en ce que** lors d'arrêts ou de pauses de consommation en eau ozonée dudit au moins un poste utilisateur on procède aux mesures suivantes : dès que le niveau de remplissage de la capacité passe au dessus du niveau haut Nh, on met ledit organe d'interruption du débit d'apport d'eau neuve en position de fermeture pour interrompre l'arrivée d'eau neuve, et l'on met ledit organe d'interruption de débit de recirculation amont de la capacité en position d'ouverture pour permettre la recirculation de l'eau ozonée de la capacité dans la boucle amont d'ozonation ainsi fermée.

5. Procédé selon la revendication 3 ou 4, **caractérisé en ce que** lors de tels arrêts ou pauses de consommation, on diminue la puissance de l'ozoneur au niveau d'une puissance minimum non nulle.

6. **Installation d'élaboration et de délivrance d'eau ozonée** à au moins un point utilisateur, comprenant :
a) une capacité (10) tampon de stockage pour l'eau ozonée ;
b) une boucle amont (20) d'ozonation permettant l'alimentation de la capacité en eau ozonée, pour laquelle :
- la capacité est intégrée dans la boucle ;
- la boucle amont d'ozonation comporte un organe (23) de transfert gaz/liquide ainsi qu'un organe de régulation (24) du débit d'eau circulant dans la boucle ;
- on dispose d'une ligne d'apport de gaz ozoné (41) reliée en sa partie aval à l'organe de transfert et en sa partie amont à un ozoneur (40);
- on dispose d'une ligne d'apport d'eau neuve (50) connectée en sa partie aval sur la boucle amont d'ozonation et munie d'un organe (51) d'interruption de débit d'eau neuve;
- la portion de boucle située entre la capacité et le point de raccordement de la ligne d'apport d'eau neuve est munie d'un organe (21) d'interruption de débit de recirculation amont de la capacité ;
c) une ligne d'alimentation (30) dudit au moins un point utilisateur en eau ozonée, à partir de la capacité ;
d) une unité (70) d'acquisition et de traitement de données apte à recevoir de l'installation des données et à rétroagir sur lesdits organe d'interruption du débit d'apport d'eau neuve et organe d'interruption de débit de recirculation amont de la capacité, pour que l'un ou l'autre desdits organes soit toujours en position d'ouverture tandis que l'autre desdits organes est alors en position de fermeture.

7. Installation selon la revendication 6, **caractérisée en ce que** la ligne d'alimentation dudit au moins un point utilisateur est munie d'un organe de pompage d'alimentation (31) et d'un piquage (32), apte à retourner le flux d'eau ozonée en provenance de la capacité vers cette capacité, avant que le flux d'eau n'atteigne le poste utilisateur.

8. Installation selon la revendication 6 ou 7, **caractérisée en ce** ladite unité (70) d'acquisition et de traitement de données, est apte, lors de phases de consommation en eau ozonée d'au moins un des dits postes utilisateur :
- à placer (70₃) ledit organe d'interruption de débit de recirculation amont de la capacité en position de fermeture, et à placer ledit organe d'interruption du débit d'apport d'eau neuve en position d'ouverture ;
- à acquérir l'un des signaux suivants : une mesure du niveau de remplissage de la capacité ou une mesure de consommation d'eau ozonée du ou des postes utilisateurs qui consomment ;
- à réguler, à partir de l'un des deux signaux précédents, le niveau de remplissage de la capacité entre un niveau bas N_{b} et un niveau haut Nₕ.

9. Installation selon la revendication 8, **caractérisée en ce que** ladite unité d'acquisition et de traitement de données est apte, lors d'arrêts ou de pauses de consommation en eau ozonée dudit au moins un poste utilisateur, à mettre ledit organe d'interruption du débit d'apport d'eau neuve en position de fermeture pour interrompre l'arrivée d'eau neuve, et à mettre ledit organe d'interruption de débit de recirculation amont de la capacité en position d'ouverture pour permettre la recirculation de l'eau ozonée de la capacité dans la boucle amont d'ozonation ainsi fermée.

10. Installation selon la revendication 8, **caractérisée en ce que** ladite unité d'acquisition et de traitement de données est apte, lors de tels arrêts ou pauses de consommation, à diminuer (70₂) la puissance de l'ozoneur au niveau d'une puissance minimum non nulle.

11. Installation selon la revendication 7, **caractérisée en ce** la boucle amont (20) d'ozonation est munie d'un organe de pompage amont (22) et en ce que cet organe de pompage amont et l'organe de pompage d'alimentation (31) ont des spécifications de débit sensiblement identiques.

## Claims

1. Process for preparing and delivering ozonized water to at least one user site, according to which:
a) a storage buffer tank (10) is provided for the ozonized water;
b) an upstream ozonizing loop (20) is provided for supplying the tank with ozonized water, in relation to which:
- the tank is integrated in the loop;
- the upstream ozonizing loop includes a gas/liquid transfer component (23) as well as a component (24) for regulating the throughput of water flowing in the loop;
- a line (41) for delivering ozonized gas is provided, which is connected at its downstream part to the transfer component and at its upstream part to an ozonizer;
- a line (50) for delivering fresh water is provided, which is connected at its downstream part onto the upstream ozonizing loop and is fitted with a component (51) for interrupting the flow of fresh water;
- the loop portion lying between the tank and the connection point of the fresh-water delivery line is fitted with a component (21) for interrupting the recirculation flow upstream of the tank;
c) a line (30) is provided for supplying the said at least one user site with ozonized water, from the tank;
d) the filling level of the tank is adjusted between a low level N_{b} and a high level Nₕ using the said component for regulating the throughput of water flowing in the ozonizing loop, one or other of the said components for interrupting the fresh-water delivery flow and the component for interrupting the recirculation flow upstream of the tank always being open while the other of the said components is closed.

2. Process according to Claim 1, **characterized in that** during phases of ozonized-water consumption by at least one of the said user stations, the said component for interrupting the recirculation flow upstream of the tank is in the closed position, and **in that** the said component for interrupting the fresh-water delivery flow is in the open position in order to make it possible to introduce fresh water into the upstream ozonizing loop, ozonize it in the transfer component, and supply the tank with the water thus ozonized, the filling level of the tank being adjusted between the low level N_{b} and the high level Nₕ using the said component for regulating the throughput of water flowing in the ozonizing loop on the basis of one of the following signals:
- a measurement (N) of the filling level of the tank;
- a measurement of ozonized-water consumption by the user station or stations which do the consuming.

3. Process according to Claim 1, **characterized in that** during stoppages or pauses in ozonized-water consumption by the said at least one user station, the ozonized-water flow coming from the tank is recirculated (32/34) to this tank before the flow of water reaches the user station.

4. Process according to Claim 1, **characterized in that** during stoppages or pauses in ozonized-water consumption by the said at least one user station, the following measures are carried out: as soon as the filling level of the tank goes above the high level Nₕ, the said component for interrupting the fresh-water delivery flow is put into the closed position in order to interrupt the intake of fresh water, and the said component for interrupting the recirculation flow upstream of the tank is put in the open position in order to make it possible to recirculate the ozonized water from the tank in the upstream ozonizing loop thus closed.

5. Process according to Claim 3 or 4, **characterized in that** during such stoppages or pauses in consumption, the power of the ozonizer is reduced to a non-zero minimum power.

6. Plant for preparing and delivering ozonized water to at least one user site, comprising:
a) a storage buffer tank (10) for the ozonized water;
b) an upstream ozonizing loop (20) for supplying the tank with ozonized water, in relation to which:
- the tank is integrated in the loop;
- the upstream ozonizing loop includes a gas/liquid transfer component (23) as well as a component (24) for regulating the throughput of water flowing in the loop;
- a line (41) for delivering ozonized gas is provided, which is connected at its downstream part to the transfer component and at its upstream part to an ozonizer (40);
- a line (50) for delivering fresh water is provided, which is connected at its downstream part onto the upstream ozonizing loop and is fitted with a component (51) for interrupting the flow of fresh water;
- the loop portion lying between the tank and the connection point of the fresh-water delivery line is fitted with a component (21) for interrupting the recirculation flow upstream of the tank;
c) a line (30) for supplying the said at least one user site with ozonized water, from the tank;
d) a data acquisition and processing unit (70) capable of receiving the data from the installation and of reacting on the said components for interrupting the fresh-water delivery flow and the component for interrupting the recirculation flow upstream of the tank, so that one or other of the said components is always in the open position while the other of the said components is then in the closed position.

7. Plant according to Claim 6, **characterized in that** the line for supplying the said at least one user site is fitted with a supply pumping component (31) and with a tap (32) capable of returning the ozonized-water flow coming from the tank to this tank, before the flow of water reaches the user station.

8. Plant according to Claim 6 or 7, **characterized in that** the said data acquisition and processing unit (70) is capable, during phases of ozonized-water consumption by at least one of the said user stations:
- of putting (70₃) the said component for interrupting the recirculation flow upstream of the tank in the closed position, and of putting the said component for interrupting the fresh-water delivery flow in the open position;
- of acquiring one of the following signals: a measurement of the filling level of the tank or a measurement of ozonized-water consumption by the user station or stations which do the consuming;
- of adjusting, on the basis of one of the two signals above, the filling level of the tank between a low level N_{b} and a high level Nₕ.

9. Plant according to Claim 8, **characterized in that** the said data acquisition and processing unit is capable, during shutdowns or pauses in ozonized-water consumption by the said at least one user station, of putting the said component for interrupting the fresh-water delivery flow in the closed position in order to interrupt the intake of fresh water, and of putting the said component for interrupting the recirculation flow upstream of the tank in the open position in order to make it possible to recirculate the ozonized water from the tank in the upstream ozonizing loop thus closed.

10. Plant according to Claim 8, **characterized in that** the said data acquisition and processing unit is capable, during shutdowns or pauses in consumption, of reducing (70₂) the power of the ozonizer to a non-zero minimum power.

11. Plant according to Claim 7, **characterized in that** the upstream ozonizing loop (20) is fitted with an upstream pumping component (22), and **in that** this upstream pumping component and the supply pumping component (31) have substantially identical throughput specifications.

## Patentansprüche

1. Verfahren zur Herstellung und Bereitstellung von ozonhaltigem Wasser für mindestens einen Benutzerpunkt, bei dem :
a) eine Pufferkapazität (10) zur Speicherung für das ozonhaltige Wasser vorgesehen ist,
b) eine stromaufwärtige Schleife (20) zur Ozonisierung vorgesehen ist, die die Versorgung der Kapazität mit ozonhaltigem Wasser ermöglicht, wobei:
- die Kapazität in die Schleife integriert ist;
- die stromaufwärtige Ozonisierungsschleife ein Element (23) zur Gas-/Flüssigkeitsweiterleitung sowie ein Element (24) zur Regelung der in der Schleife zirkulierenden Wassermenge umfasst;
- eine Leitung (41) zur Zufuhr von ozonhaltigem Gas vorgesehen ist, die in ihrem stromabwärtigen Teil mit dem Weiterleitungselement und in ihrem stromaufwärtigen Teil mit einem Ozonisierungselement verbunden ist;
- eine Leitung (50) zur Zufuhr von frischem Wasser vorgesehen ist, die an ihrem stromabwärtigen Teil an die stromaufwärtige Ozonisierungsschleife angeschlossen und mit einem Element (51) zur Unterbrechung der Frischwassermenge versehen ist;
- der Schleifenabschnitt, der sich zwischen der Kapazität und dem Anschlusspunkt der Leitung zur Zufuhr von Frischwasser befindet, mit einem Element (21) zur Unterbrechung der Rezirkulationsmenge stromaufwärts zur Kapazität versehen ist;
c) eine Leitung (30) zur Versorgung des mindestens einen Benutzerpunktes mit ozonhaltigem Wasser aus der Kapazität vorgesehen ist;
d) der Füllstand der Kapazität zwischen einem niedrigen Füllstand N_{b} und einem hohen Füllstand Nₕ mit Hilfe des Elements zur Regelung der in der Ozonisierungsschleife zirkulierenden Wassermenge eingestellt wird, wobei das eine oder das andere des Elements zur Unterbrechung der zugeführten Frischwassermenge und des Elements zur Unterbrechung der Rezirkulationsmenge stromaufwärts zu der Kapazität immer offen ist, während das andere dieser Elemente geschlossen ist.

2. Verfahren nach Anspruch 1, **dadurch gekennzeichnet, dass** während Phasen des Verbrauchs von ozonhaltigem Wasser durch mindestens eine der Benutzerstationen das Element zur Unterbrechung der Rezirkulationsmenge stromaufwärts zu der Kapazität in Verschlussposition ist, und dass das Element zur Unterbrechung der zugeführten Frischwassermenge in Öffnungsposition ist, um es zu ermöglichen, frisches Wasser in die stromaufwärtige Ozonisierungsschleife einzulassen, dieses im Bereich des Weiterleitungselements zu ozonisieren und die Kapazität mit dem so ozonisierten Wasser zu versorgen, wobei der Füllstand der Kapazität zwischen dem niedrigen Füllstand N_{b} und dem hohen Füllstand Nₕ mit Hilfe des Elements zur Regelung der in der Ozonisierungsschleife zirkulierenden Wassermenge auf Basis eines der folgenden Signale geregelt wird:
- Messung (N) des Füllstands der Kapazität;
- Messung des Verbrauchs an ozonhaltigem Wasser der verbrauchenden Benutzerstation(en).

3. Verfahren nach Anspruch 1, **dadurch gekennzeichnet, dass** bei Einstellungen oder Pausen im Verbrauch von ozonhaltigem Wasser durch die mindestens eine Benutzerstation eine Rezirkulation (32/34) des Stroms an ozonhaltigem Wasser von der Kapazität zur Kapazität durchgeführt wird, bevor der Wasserstrom die Benutzerstation erreicht.

4. Verfahren nach Anspruch 1, **dadurch gekennzeichnet, dass** bei Einstellungen oder Pausen im Verbrauch von ozonhaltigem Wasser durch die mindestens eine Benutzerstation folgende Maßnahmen getroffen werden: sobald der Füllstand der Kapazität den hohen Füllstand Nₕ überschreitet, wird das Element zur Unterbrechung der zugeführten Frischwassermenge in Verschlussposition gebracht, um die Frischwasserzufuhr zu unterbrechen, und wird das Element zur Unterbrechung der Rezirkulationsmenge stromaufwärts zur Kapazität in Öffnungsposition gebracht, um die Rezirkulation des ozonhaltigen Wassers von der Kapazität in die so geschlossene stromaufwärtige Ozonisierungsschleife zu ermöglichen.

5. Verfahren nach Anspruch 3 oder 4, **dadurch gekennzeichnet, dass** bei solchen Einstellungen oder Pausen des Verbrauchs die Leistung des Ozonisierungselements auf das Niveau einer Mindestleistung ungleich Null verringert wird.

6. Anlage zur Herstellung und Bereitstellung von ozonhaltigem Wasser für mindestens einen Benutzerpunkt, umfassend :
a) eine Pufferkapazität (10) zur Speicherung für das ozonhaltige Wasser,
b) eine stromaufwärtige Schleife (20) zur Ozonisierung, die die Versorgung der Kapazität mit ozonhaltigem Wasser ermöglicht, wobei:
- die Kapazität in die Schleife integriert ist;
- die stromaufwärtige Ozonisierungsschleife ein Element (23) zur Gas-/Flüssigkeitsweiterleitung sowie ein Element (24) zur Regelung der in der Schleife zirkulierenden Wassermenge umfasst;
- eine Leitung zur Zufuhr von ozonhaltigem Gas (41) vorgesehen ist, die in ihrem stromabwärtigen Teil mit dem Weiterleitungselement und in ihrem stromaufwärtigen Teil mit einem Ozonisierungselement (40) verbunden ist;
- eine Leitung zur Zufuhr von frischem Wasser (50) vorgesehen ist, die an ihrem stromabwärtigen Teil an die stromaufwärtige Ozonisierungsschleife angeschlossen und mit einem Element (51) zur Unterbrechung der Frischwassermenge versehen ist;
- der Schleifenabschnitt, der sich zwischen der Kapazität und dem Anschlusspunkt der Leitung zur Zufuhr von Frischwasser befindet, mit einem Element (21) zur Unterbrechung der Rezirkulationsmenge stromaufwärts zur Kapazität versehen ist;
c) eine Leitung (30) zur Versorgung des mindestens einen Benutzerpunktes mit ozonhaltigem Wasser aus der Kapazität;
d) eine Einheit (70) zur Erfassung und Bearbeitung von Daten, die von der Anlage Daten empfangen und auf die Elemente zur Unterbrechung der zugeführten Frischwassermenge und zur Unterbrechung der Rezirkulationsmenge stromaufwärts zur Kapazität einwirken kann, damit sich das eine oder das andere der Elemente immer in Öffnungsposition befindet, während sich das andere der Elemente nun in Verschlussposition befindet.

7. Anlage nach Anspruch 6, **dadurch gekennzeichnet, dass** die Leitung zur Versorgung des mindestens einen Benutzerpunktes mit einem Pumpversorgungselement (31) und einer Rohrabzweigung (32) versehen ist, die den ozonhaltigen Wasserstrom von der Kapazität zu dieser Kapazität zurückleiten kann, bevor der Wasserstrom die Benutzerstation erreicht.

8. Anlage nach Anspruch 6 oder 7, **dadurch gekennzeichnet, dass** die Einheit (70) zur Erfassung und Verarbeitung von Daten während der Verbrauchsphasen von ozonhaltigem Wasser durch mindestens eine der Verbraucherstationen in der Lage ist:
- das Element zur Unterbrechung der Rezirkulationsmenge stromaufwärts zu der Kapazität in Verschlussposition anzuordnen (70₃) und das Element zur Unterbrechung der zugeführten Frischwassermenge in Öffnungsposition anzuordnen;
- eines der folgenden Signale zu erfassen: eine Messung des Füllstandes der Kapazität oder eine Messung des Verbrauchs an ozonhaltigem Wasser durch die verbrauchende(n) Benutzerstation(en) ;
- aus einem der vorhergehenden Signale den Füllstand der Kapazität zwischen einem niedrigen Füllstand N_{b} und einem hohen Füllstand Nₕ zu regeln.

9. Anlage nach Anspruch 8, **dadurch gekennzeichnet, dass** die Einheit zur Erfassung und Verarbeitung von Daten in der Lage ist, bei Einstellungen oder Pausen des Verbrauchs an ozonhaltigem Wasser der mindestens einen Benutzerstation das Element zur Unterbrechung der zugeführten Frischwassermenge in Verschlussposition zu bringen, um die Frischwasserzufuhr zu unterbrechen, und das Element zur Unterbrechung der Rezirkulationsmenge stromaufwärts zu der Kapazität in Öffnungsposition zu bringen, um die Rezirkulation des ozonhaltigen Wassers von der Kapazität in die so geschlossene stromaufwärtige Ozonisierungsschleife zu ermöglichen.

10. Anlage nach Anspruch 8, **dadurch gekennzeichnet, dass** die Einheit zur Erfassung und Verarbeitung von Daten in der Lage ist, bei solchen Einstellungen oder Pausen des Verbrauchs die Leistung des Ozonisierungselements auf das Niveau einer Mindestleistung ungleich Null zu verringern (70₂).

11. Anlage nach Anspruch 7, **dadurch gekennzeichnet, dass** die stromaufwärtige (20) Ozonisierungsschleife mit einem stromaufwärtigen Pumpelement (22) versehen ist, und dass dieses stromaufwärtige Pumpelement und das Versorgungspumpelement (31) im Wesentlichen identische Mengenspezifikationen haben.
